# EUROPEAN PATENT SPECIFICATION

(11) **EP 3 592 586 B1**
(45) Date of publication and mention of the grant of the patent: **11.10.2023**
(21) Application number: 18713800.3
(22) Date of filing: 06.03.2018
(51) Int. Cl.: B60H 1/00, F16H 57/00

(54) **SUB-ASSEMBLY**
UNTERBAUGRUPPE
SOUS-ENSEMBLE

(30) Priority: 09.03.2017 DE 102017104951
(43) Date of publication of application: 15.01.2020
(73) Proprietor: Valeo Klimasysteme GmbH, 96476 Bad Rodach (DE)
(72) Inventor: WEBER, Jens, 96476 Bad Rodach (DE)
(74) Representative: Valeo Systèmes Thermiques
(86) International application number: PCT/EP2018/055504
(87) International publication number: WO 2018/162499

(56) References cited:
- EP-A1- 0 617 213
- EP-A1- 2 420 705

## Description

The invention relates to a sub-assembly, in particular for a vehicle heating, ventilation and/or air-conditioning system (HVAC).

In vehicle heating, ventilation and/or air-conditioning systems (hereinafter abbreviated to "air-conditioning system"), movably mounted components, such as slotted disks or gearwheels, are generally provided for transmitting movement and force. These components are fastened to the carrier and are movable relative thereto.

In some applications, it is necessary for the position of this movable component relative to the carrier to be accurately known after mounting the air-conditioning system, in order to permit an accurate control of the air-conditioning system. To this end, retaining pins which block a movement of the movable component before and during mounting are generally used, so that the position of the movable component is predetermined. After mounting, the retaining pin then has to be removed in order to release the movable component.

A drawback here is that by pulling out the retaining pin a further operating step is necessary, whereby the mounting costs are increased.

EP2420705A1 discloses an actuator having a movement controlling unit for controlling movement of levers, and a lock separated from the movement controlling unit movably mounted on an actuator frame and displaced from exterior of the actuator for passing from a position, in which the lock prevents the levers from moving, into a position in which the lock allows moving of the levers. The lock is mounted slidably and movable with respect to the frame in a direction parallel to a rotation axis of the levers.

It is, therefore, the object of the invention to provide a sub-assembly which reduces the mounting costs of an air-conditioning system.

The object is achieved by a sub-assembly according to claim 1, in particular for a vehicle heating, ventilation and/or air-conditioning system, comprising a carrier, a body, a component which is movably mounted on the carrier and which transmits a movement during operation of the sub-assembly and a securing unit which is joined to the carrier and which is movable relative to the carrier, in particular in a resilient manner, such that the securing unit is able to adopt a retaining position in which the securing unit prevents a movement of the component relative to the carrier and a released position in which a movement of the component relative to the carrier is released. The carrier in this case is configured together with the component such that it may be coupled to the body. The securing unit is in the retaining position when the body and the carrier are still uncoupled and the securing unit is in the released position when the body and the carrier are attached to one another in their final position. The sub-assembly does not have to have an actuator but it may be a sub-assembly purely for the transmission of force and/or movement. The component may be provided on the side of the carrier facing the body.

The securing unit thus prevents a movement, in particular any movements, of the component relative to the carrier before the carrier is mounted on the body, so that the position of the component is determined and known at any time. Since when coupling the carrier and the body, i.e. when mounting the sub-assembly, the securing unit is moved from the carrier from its retaining position into its released position, a further mounting step which only serves to release the movable component is no longer necessary. Thus the coupling movement simultaneously forces the securing unit into the released position.

According to the invention, the securing unit comprises a blocking element and the component comprises a counter-blocking element or vice-versa, wherein the blocking element and the counter-blocking element in the retaining position of the securing unit engage in one another and in the released position of the securing unit are released from one another. In this case, the term "engage in one another" is also understood amongst other things as the blocking of a movement by two friction surfaces bearing against one another, edges blocking one another or complementary bearing surfaces. In this manner, a reliable fixing of the movable component is possible.

According to the invention, the blocking element is a projection and the counter-blocking element is a recess, wherein the projection in the retaining position of the securing unit engages in the recess and in the released position is fully removed from the recess, so that a movement of the component is prevented in a simple and reliable manner.

In order to transmit a force and/or movement and/or in order to adjust positions of other components of the air-conditioning system, the component may be a disk, in particular a cam disk, a slotted disk or a gearwheel, which is rotatably mounted on the carrier.

For example, the counter-blocking element of the disk or the gearwheel is provided on the peripheral surface and/or on the front face of the disk or the gearwheel, whereby the securing unit is able to cooperate in a simple manner with the disk or the gearwheel.

In one embodiment of the invention, the securing unit comprises a spring portion, an actuating portion and a blocking portion, wherein the blocking element is configured on the blocking portion and the spring portion subjects the blocking portion to a force in the direction of the component. In this case, the securing unit may be a resilient tongue, it may have a U-shape and/or extend partially on the side of the carrier remote from the component. By the spring portion it is ensured that the securing unit reliably remains in its retaining position.

In order to reduce the number of components, the blocking element may be integrally designed with the securing unit and may be fastened by means of the spring portion to the carrier or may be an integral component of the carrier.

In one variant, the securing unit is a metal spring element with a freely protruding tongue which extends in the direction of the body and which at the free end has the actuating portion and adjacent thereto the blocking portion, a spring portion curved in a U-shaped manner and a fastening portion adjacent thereto, by which the spring element is fastened to the carrier. In this case, the actuating portion may be provided on the side of the blocking portion remote from the spring portion or between the blocking portion and the spring portion. In this manner, a reliable securing unit is produced in a cost-effective manner.

The carrier may comprise a guide for a guide element, in particular for a guide pin of the body, said guide pin in the released position aligning the carrier and the body relative to one another, whereby it is ensured that the carrier is coupled to the body in the correct manner.

According to the invention, the sub-assembly comprises the body. In this case a release portion may be provided on the body, said release portion being able to force the securing unit into the released position, so that the securing unit may be moved from the retaining position into its released position in a simple manner.

Preferably, the release portion is an extension, in particular with an oblique surface which comes to bear against the securing unit and which, when the body is moved in the direction of its final position on the carrier, acts on the securing unit and forces said securing unit into the released position. By means of the oblique surface it is ensured that the securing unit is moved in the correct direction.

In order to initiate the movement from the retaining position into the released position in good time during mounting, the extension protrudes in the direction of the carrier relative to a base body, in particular, a wall of the body. In this case, the extension may extend from the base portion, in particular from the wall.

In one variant, the carrier and the body at least partially form a housing in order to protect the movable component from undesirable external influences.

Further features and advantages of the invention are disclosed from the following description and from the accompanying drawings, reference being made thereto. In the drawings:
- Figure 1 shows schematically a sub-assembly according to the invention in plan view,
- Figure 2 shows a schematic sectional view through the sub-assembly according to Figure 1 along the line II-II in Figure 1,
- Figures 3a) and 3b) show schematically a side view of a sub-assembly according to the invention in the state which is not yet coupled and/or in the final mounting position, and
- Figure 4 shows in detail a second embodiment of a sub-assembly according to the invention, schematically in section.

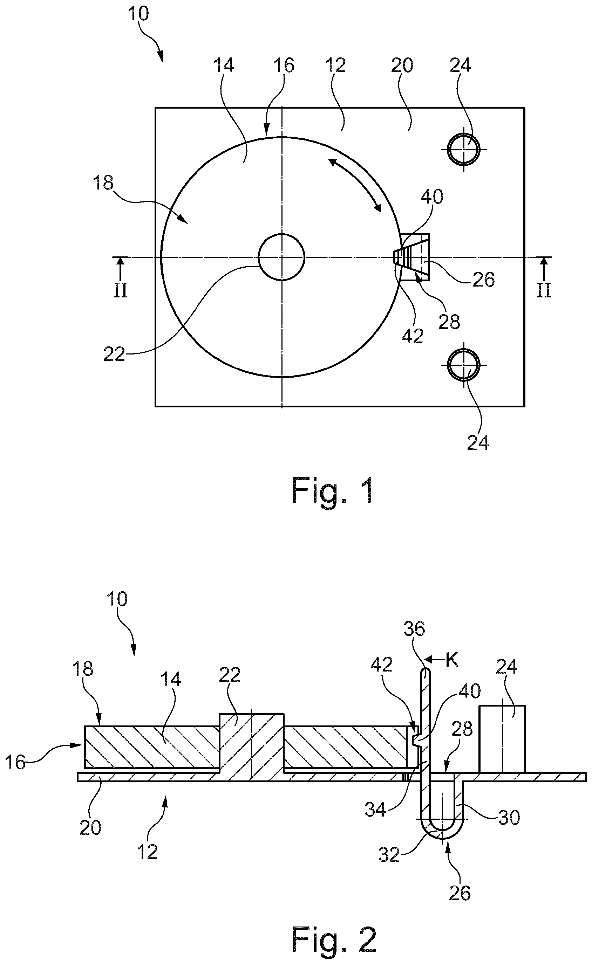

In Figures 1 and 2 a sub-assembly 10 with a carrier 12 and a component 14 movably mounted on the carrier 12 are shown schematically.

The sub-assembly 10 is, for example, a sub-assembly for transmitting movement and/or force in a vehicle heating, ventilation and/or air-conditioning system (hereinafter for simplicity called simply "air-conditioning system") and serves, for example, for controlling the position of flaps of the air-conditioning system.

The transmission of movement and/or force in this case takes place by means of the component 14 which in the embodiment shown is a disk, for example a cam disk, a slotted disk or a gearwheel.

The component 14 has, therefore, a peripheral surface 16 and a front face 18.

The carrier 12 has a base portion 20 which is of plate-shaped configuration. An axle 22 extends from the base portion 20, the component 14 being rotatably mounted on said axle. The axle 22 may in this case extend entirely through the component 14.

The side of the base portion 20 on which the axle extends 22, and on which the component 14 is arranged, for simplicity is simply called the upper face hereinafter and the direction in which the axle 22 extends in the embodiments shown is denoted as "upward".

These terms are irrespective of the actual position and alignment of the sub-assembly fitted in the vehicle.

Two guides 24 which are designed as upwardly open hollow cylinders extend in the same direction as the axle 22, i.e. extend upwardly in the embodiment shown from the base portion 20.

The carrier 12 also has a securing unit 26 which is also fastened to the base portion 20.

In the region of the securing unit 26, the base portion 20 has a recess 28 which in the exemplary embodiment shown is a through-hole through the base portion 20.

The securing unit 26 has a fastening portion 30. A spring portion 32 adjoins the fastening portion 30 and a blocking portion 34 adjoins said spring portion. Finally, an actuating portion 36 of the securing unit 26 adjoins the blocking portion 34.

However, also conceivable is a further sequence of the portions 30 to 36, in particular the blocking portion 34 and the actuating portion 36 may be exchanged in their position.

The securing unit 26 is fastened by means of the fastening portion 30 to the base portion 20. More specifically, the fastening portion 30 fastens the spring portion 32 to the carrier.

By means of the spring portion 32, the securing unit 26, more specifically the blocking portion 34 and the actuating portion 36, is resiliently mounted relative to the carrier 12 and/or the base portion 20, so that the securing unit 26 may adopt at least one retaining position and one released position.

To this end, starting from the base portion 20, the fastening portion 30 and the spring portion 32 initially extend downwardly, i.e. on the side of the carrier 12 on which the component 14 is not provided.

In the retaining position, the spring portion 32 is U-shaped and initially extends from the fastening portion 30 in a semi-circle. Subsequently, the spring portion 32 extends slightly offset and parallel to the fastening portion 30, again toward the base portion 20 and through the recess 28 of the base portion 20.

The blocking portion 34 adjoins the spring portion 32 on the side of the carrier 12 on which the component 14 is provided. The blocking portion 34 extends in the immediately vicinity past the component 14, in particular parallel to the peripheral surface 16 of the component 14.

Above the component 14 the actuating portion 36 adjoins the blocking portion 34, said actuating portion protruding upwardly over the component 14. The actuating portion 36 and the blocking portion 34 in this case may form a straight line.

The securing unit 26 may also be regarded as a spring element with a freely protruding tongue, which has a free end which extends in the same direction as the axle 22, i.e. upwardly. The actuating portion 36 is provided at the free end of this spring element, the blocking portion 34 adjoining said actuating portion. By means of the spring portion 32 which is curved in a U-shaped manner and the fastening portion 30 joined thereto, the free end and, in particular, the blocking portion 34 are resiliently joined to the base portion 20.

A blocking element 40 is configured on the blocking portion 34 for fixing the component 14, said blocking element protruding as a projection from the blocking portion 34 in the direction of the component 14.

The blocking element 40 is designed integrally with the blocking portion 34. In particular, the entire securing unit 26 may be designed integrally with the base portion 20, i.e. the carrier 12.

For example, the carrier 12 together with the securing unit 26 are made of metal.

In the region of the blocking portion 34, the component 14 on its peripheral surface 16 has a counter-blocking element 42 which is complementary to the blocking element 40 and which in the embodiment shown is a recess, the projection of the blocking element 40 being able to engage therein.

In the situation shown in Figure 2, the securing unit 26 is in its retaining position in which the blocking portion 34 is acted upon by the spring portion 32 with a force K in the direction of the component 14, so that the blocking element 40 is in engagement with the counter-blocking element 42. The securing unit 26 is thus in its retaining position when the carrier 12 is unmounted.

In this case, the recess of the counter-blocking element 42 in the peripheral direction of the component 14 is adapted to the size of the blocking element 40 such that no clearance or only a very small amount of clearance of the component 14 is present when the blocking element 40 engages in the counter-blocking element 42.

As a result, in the retaining position a rotation of the component 14 relative to the axle 22 of the carrier is effectively prevented. The exact position of the component 14 is thus defined during mounting.

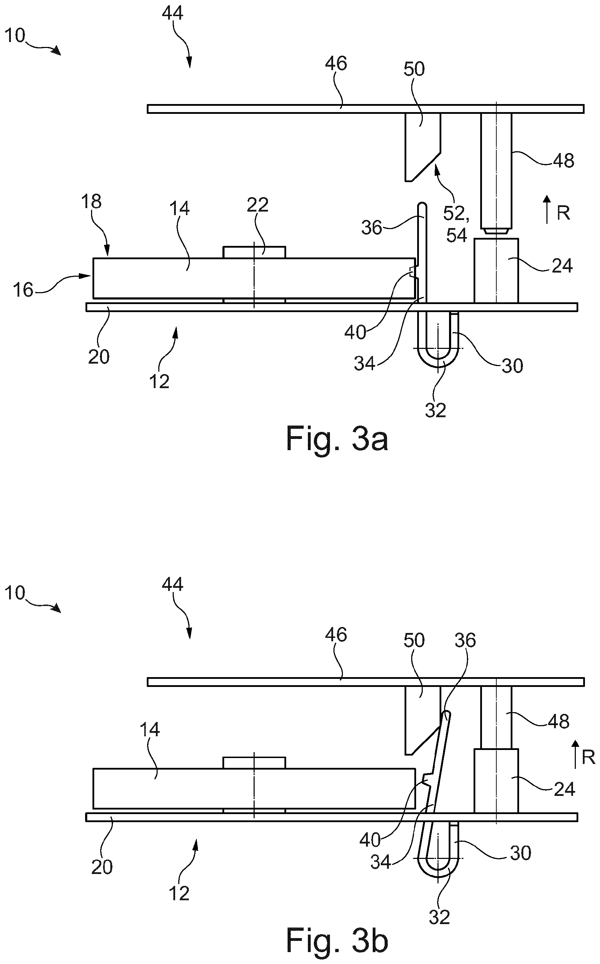

In Figures 3a) and 3b) two steps during the mounting of the carrier 12 with the component 14 are shown.

The carrier 12 is intended to be mounted and/or coupled to a body 44 which in this case is only partially shown, wherein the carrier 12 in Figure 3a) is unmounted.

Uncoupled, unmounted or not mounted means within the scope of this invention that the carrier 12 and the body 44 are not yet mounted on one another and/or the process has not yet been initiated to couple the body 44 and the carrier 12 together. In this case, the body 44 and the carrier 12 may be in contact with one another or may be joined together by other elements, for example in order to make the carrier 12 and the body 44 unreleasable.

In the embodiment of the invention, the body 44 is part of the sub-assembly 10 and the carrier 12 and the body 44 together form at least partially a housing for the component 14.

The body 44 has a base body 46 which in the embodiment shown is configured to be plate-shaped, in particular as a wall. From the base body 46, two guide elements 48 extended downwardly, i.e. in the direction from which the carrier 12 is intended to be mounted.

The guide elements 48 are designed as guide pins which have an external contour which corresponds to the internal contour of the hollow cylinder of the guides 24 of the carrier 12.

Additionally, an extension 50 extends downwardly from the base body 46. In the embodiment shown, the extension 50 has on its free end, i.e. facing the carrier 12, an oblique surface 52 which serves as a release portion 54.

The oblique surface 52 is angled relative to the mounting direction R, i.e. the direction in which the carrier 12 and the body 44 are moved toward one another. In this case, the point of the oblique surface 52 which is furthest removed from the base body 46 faces the component 14 and/or the axle 22. The oblique surface 52 thus extends away from the component 14.

If the carrier 12 is now intended to be mounted on the body 44, i.e. coupled thereto, the carrier 12 and the body 44 are initially brought closer together. This situation is shown in Figure 3a).

In this position, the body 44 and the carrier 12 are not yet coupled and the securing unit 26 is thus still in its retaining position.

The upper face of the carrier in this case faces the body 44, i.e. the component 14 is arranged between the base portion 20 of the carrier 12 and the base body 46 of the body 44.

In order to bring the carrier 12 and the body 44 closer together, the guide elements 48 are introduced into the guides 24, whereby the carrier 12 and the body 44 are aligned relative to one another.

The positions of the securing unit 26 and the extension 50 relative to the guides 24 and/or the guide elements 48 is selected in this case such that the release portion 54 of the extension 50 in the mounting direction is now located above the actuating portion 36 of the securing unit 26.

If the carrier 12 and the body 44 are now brought closer together, the oblique surface 52 comes into contact with the actuating portion 36.

If the carrier 12 is moved further in the mounting direction R relative to the body 44, the actuating portion 36 is pushed away from the component 14 by the oblique surface 52, so that the blocking portion 34 is also moved away from the component 14 and the spring portion 32 is tensioned.

In this case, the blocking element 40 is also moved out of the counter-blocking element 42, so that the component 14 may now move freely about the axle 22.

In this position, the fastening portion 30 may already have run along the entire oblique surface 52 and may now bear at the side against the extension 50.

The securing unit 26 is now located in its released position which is shown in Figure 3b). The released position is reached at the latest when the body 44 and the carrier 12 have reached their final position relative to one another.

The carrier 12 and the body 44 are thus coupled together and fully mounted. In this case, the movement of the component 14 has been automatically released without requiring a further mounting step.

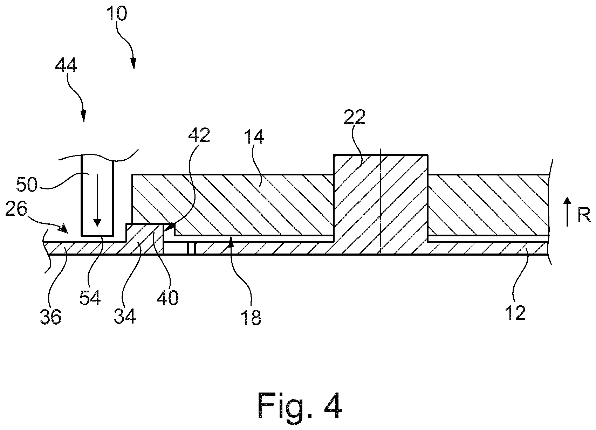

A second embodiment of the sub-assembly 10 which substantially corresponds to the first embodiment is shown in Figure 4. Therefore, hereinafter, only the differences are described and components which are the same and functionally the same are provided with the same reference numerals.

In Figure 4, only the extension 50 is shown of the body 44. The extension 50 in this embodiment does not have an oblique surface 52 but the free end of the extension 50 forms the release portion 54, also without a chamfer.

Moreover, the carrier 12 and the component 14 are only shown partially, wherein the securing unit 26 in the second embodiment no longer extends substantially parallel to the axle 22 but perpendicular thereto.

The securing unit 26 may extend in the plane of the base portion 20 in the retaining position.

In this second embodiment, the actuating portion 36 adjoins the spring portion 32, and the blocking portion 34 adjoins the actuating portion on the side of the actuating portion 36 remote from the spring portion 32.

The blocking portion 34 thus extends along one of the front faces 18 of the component 14, in this case along the front face 18 facing the base portion 20.

The counter-blocking element 42 of the component 14 is accordingly also provided on this front face 18, so that the component 14 is now blocked via the front face 18.

During the mounting of the sub-assembly 10 according to the second embodiment, the release portion 54 of the extension 50 presses onto the actuating portion 36 so that the blocking portion 34 is also moved away downwardly from the component 14. As a result, the blocking element 40 of the blocking portion 34 is removed from the counter-blocking element 42 and the movement of the component 14 is released.

The component 10 according to the second embodiment permits a more compact design of the air-conditioning system.

Other variants of the blocking element and of the counter-blocking element, for example as friction surfaces, protruding edges or complementary bearing surfaces are also conceivable. Naturally the counter-blocking element 42 may be a projection and the blocking element 40 may be a recess.

## Claims

1. Sub-assembly, in particular for a vehicle heating, ventilation and/or air-conditioning system, comprising
a carrier (12),
a body (44),
a component (14) which is movably mounted on the carrier (12) and which transmits a movement during operation of the sub-assembly (10) and
a securing unit (26) which is joined to the carrier (12) and which is movable relative to the carrier (12), in particular in a resilient manner, such that the securing unit (26) is able to adopt a retaining position in which the securing unit (26) prevents a movement of the component (14) relative to the carrier (12) and a released position in which a movement of the component (14) relative to the carrier (12) is released,
wherein the carrier (12) is configured together with the component (14) such that it may be coupled to the body (44), and
wherein the securing unit (26) is in the retaining position when the body (44) and the carrier (12) are still uncoupled and the securing unit (26) is in the released position when the body (44) and the carrier (12) are attached to one another in their final position, **characterized in that**
the securing unit (26) comprises a blocking element (40) and the component (14) comprises a counter-blocking element (42) or vice-versa, wherein the blocking element (40) and the counter-blocking element (42) in the retaining position of the securing unit (26) engage in one another and in the released position of the securing unit (26) are released from one another, and
wherein the blocking element (40) is a projection and the counter-blocking element (42) is a recess, wherein the projection in the retaining position of the securing unit (26) engages in the recess and in the released position is fully removed from the recess.

2. Sub-assembly according claim 1, **characterized in that** the component (14) is a disk, in particular a cam disk, slotted disk or a gearwheel, which is rotatably mounted on the carrier (12).

3. Sub-assembly according to claim 1 or 2, **characterized in that** the securing unit (26) comprises a spring portion (32), an actuating portion (36) and a blocking portion (34), wherein the blocking element (40) is configured on the blocking portion and the spring portion (32) subjects the blocking portion (34) to a force (K) in the direction of the component (14).

4. Sub-assembly according to one of the preceding claims, **characterized in that** the blocking element (40) is integrally designed with the securing unit (26) and is fastened by means of the spring portion (32) to the carrier (12) or is an integral component of the carrier (12) .

5. Sub-assembly according to one of the preceding claims, **characterized in that** the carrier (12) comprises a guide (24) for a guide element (48), in particular a guide pin of the body (44), said guide pin in the released position aligning the carrier (12) and the body (44) relative to one another.

6. Sub-assembly according to Claim 1, **characterized in that** a release portion (54) is provided on the body (44), said release portion being able to force the securing unit (26) into the released position.

7. Sub-assembly according to Claim 6, **characterized in that** the release portion (54) is an extension (50), in particular with an oblique surface (52) which comes to bear against the securing unit (26) and which, when the body (44) is moved in the direction of its final position on the carrier (12), acts on the securing unit (26) and is able to force said securing unit into the released position.

## Patentansprüche

1. Unterbaugruppe, insbesondere für eine Fahrzeugheizung, ein Lüftungssystem und/oder eine Klimaanlage, umfassend
einen Träger (12),
einen Körper (44),
ein Bauteil (14), das bewegbar auf dem Träger (12) montiert ist und das eine Bewegung während des Betriebs der Unterbaugruppe (10) überträgt, und
eine mit dem Träger (12) verbundene Befestigungseinheit (26), die relativ zum Träger (12), insbesondere elastisch, so bewegbar ist, dass die Befestigungseinheit (26) in der Lage ist, eine Halteposition, in der die Befestigungseinheit (26) eine Bewegung des Bauteils (14) relativ zum Träger (12) verhindert, und eine Freigabeposition, in der eine Bewegung des Bauteils (14) relativ zum Träger (12) freigegeben ist, einzunehmen, wobei der Träger (12) zusammen mit dem Bauteil (14) so ausgelegt ist, dass er mit dem Körper (44) gekoppelt werden kann, und
wobei sich die Befestigungseinheit (26) in der Halteposition befindet, wenn der Körper (44) und der Träger (12) noch entkoppelt sind, und sich die Befestigungseinheit (26) in der Freigabeposition befindet, wenn der Körper (44) und der Träger (12) in ihrer Endposition aneinander befestigt sind, **dadurch gekennzeichnet, dass**
die Befestigungseinheit (26) ein Sperrelement (40) und das Bauteil (14) ein Gegensperrelement (42) oder umgekehrt umfasst, wobei das Sperrelement (40) und das Gegensperrelement (42) in der Halteposition der Befestigungseinheit (26) ineinandergreifen und in der Freigabeposition der Befestigungseinheit (26) voneinander gelöst sind, und
wobei das Sperrelement (40) ein Vorsprung und das Gegensperrelement (42) eine Ausnehmung ist, wobei der Vorsprung in der Halteposition der Befestigungseinheit (26) in die Ausnehmung eingreift und in der Freigabeposition vollständig aus der Ausnehmung entfernt ist.

2. Unterbaugruppe gemäß Anspruch 1, **dadurch gekennzeichnet, dass** das Bauteil (14) eine Scheibe, insbesondere eine Kurvenscheibe, Schlitzscheibe oder ein Zahnrad ist, das drehbar auf dem Träger (12) montiert ist.

3. Unterbaugruppe gemäß Anspruch 1 oder 2, **dadurch gekennzeichnet, dass** die Befestigungseinheit (26) einen Federabschnitt (32), einen Betätigungsabschnitt (36) und einen Sperrabschnitt (34) umfasst, wobei das Sperrelement (40) am Sperrabschnitt ausgebildet ist und der Federabschnitt (32) den Sperrabschnitt (34) mit einer Kraft (K) in Richtung des Bauteils (14) beaufschlagt.

4. Unterbaugruppe gemäß einem der vorhergehenden Ansprüche, **dadurch gekennzeichnet, dass** das Sperrelement (40) einstückig mit der Befestigungseinheit (26) gestaltet ist und mittels des Federabschnitts (32) am Träger (12) befestigt ist oder ein einstückiger Bestandteil des Trägers (12) ist.

5. Unterbaugruppe gemäß einem der vorhergehenden Ansprüche, **dadurch gekennzeichnet, dass** der Träger (12) eine Führung (24) für ein Führungselement (48), insbesondere einen Führungsstift des Körpers (44), umfasst, der in der Freigabeposition den Träger (12) und den Körper (44) zueinander ausrichtet.

6. Unterbaugruppe gemäß Anspruch 1, **dadurch gekennzeichnet, dass** am Körper (44) ein Freigabeabschnitt (54) vorgesehen ist, der in der Lage ist, die Befestigungseinheit (26) in die Freigabeposition zu zwingen.

7. Unterbaugruppe gemäß Anspruch 6, **dadurch gekennzeichnet, dass** der Freigabeabschnitt (54) ein Fortsatz (50), insbesondere mit einer Schrägfläche (52) ist, die an der Befestigungseinheit (26) zur Anlage kommt und die beim Bewegen des Körpers (44) in Richtung seiner Endposition auf dem Träger (12) auf die Befestigungseinheit (26) einwirkt und in der Lage ist, diese in die Freigabeposition zu zwingen.

## Revendications

1. Sous-ensemble, notamment pour un système de chauffage, ventilation et/ou climatisation de véhicule, comprenant
un support (12),
un corps (44),
un composant (14) qui est monté mobile sur le support (12) et qui transmet un mouvement durant le fonctionnement du sous-ensemble (10) et
une unité d'immobilisation (26) qui est reliée au support (12) et qui est mobile par rapport au support (12), notamment d'une manière élastique, de sorte que l'unité d'immobilisation (26) est apte à adopter une position de maintien dans laquelle l'unité d'immobilisation (26) empêche un mouvement du composant (14) par rapport au support (12) et une position libérée dans laquelle un mouvement du composant (14) par rapport au support (12) est libéré,
le support (12) étant configuré conjointement avec le composant (14) de sorte à permettre son accouplement au corps (44), et
l'unité d'immobilisation (26) occupant la position de maintien lorsque le corps (44) et le support (12) sont encore désaccouplés et l'unité d'immobilisation (26) occupant la position libérée lorsque le corps (44) et le support (12) sont fixés l'un à l'autre dans leur position finale, **caractérisé en ce que**
l'unité d'immobilisation (26) comprend un élément de blocage (40) et le composant (14) comprend un élément de contre-blocage (42) ou inversement, l'élément de blocage (40) et l'élément de contre-blocage (42) dans la position de maintien de l'unité d'immobilisation (26) s'engageant l'un dans l'autre et, dans la position libérée de l'unité d'immobilisation (26), étant libérés l'un de l'autre, et l'élément de blocage (40) prenant la forme d'une protubérance et l'élément de contre-blocage (42) prenant la forme d'un creux, la protubérance dans la position de maintien de l'unité d'immobilisation (26) s'engageant dans le creux et, dans la position libérée, étant complètement sortie du creux.

2. Sous-ensemble selon la revendication 1, **caractérisé en ce que** le composant (14) est un disque, notamment un disque à came, un disque à encoches ou une roue dentée, qui est monté rotatif sur le support (12).

3. Sous-ensemble selon la revendication 1 ou 2, **caractérisé en ce que** l'unité d'immobilisation (26) comprend une partie ressort (32), une partie d'actionnement (36) et une partie de blocage (34), l'élément de blocage (40) étant agencé sur la partie de blocage et la partie ressort (32) soumettant la partie de blocage (34) à une force (K) dans la direction du composant (14).

4. Sous-ensemble selon l'une des revendications précédentes, **caractérisé en ce que** l'élément de blocage (40) est conçu d'une seule pièce avec l'unité d'immobilisation (26) et est attaché au support (12) au moyen de la partie ressort (32) ou est un composant faisant partie intégrante du support (12).

5. Sous-ensemble selon l'une des revendications précédentes, **caractérisé en ce que** le support (12) comprend un guide (24) pour un élément de guidage (48), notamment un tenon de guidage du corps (44), ledit tenon de guidage dans la position libérée alignant le support (12) et le corps (44) l'un par rapport à l'autre.

6. Sous-ensemble selon la revendication 1, **caractérisé en ce qu'**une partie de libération (54) est prévue sur le corps (44), ladite partie de libération étant apte à forcer l'unité d'immobilisation (26) dans la position libérée.

7. Sous-ensemble selon la revendication 6, **caractérisé en ce que** la partie de libération (54) est un prolongement (50), notamment pourvu d'un pan incliné (52) qui vient en appui contre l'unité d'immobilisation (26) et qui, lorsque le corps (44) est déplacé dans la direction de sa position finale sur le support (12), agit sur l'unité d'immobilisation (26) et est apte à forcer ladite unité d'immobilisation dans la position libérée.
